Europäisches Patentamt

European Patent Office

Office européen des brevets

(11) Veröffentlichungsnummer: **0 074 922**
**B1**

## EUROPÄISCHE PATENTSCHRIFT

(45) Veröffentlichungstag der Patentschrift: **23.03.88**

(51) Int. Cl.⁴: **F 16 H 25/20, F 15 B 9/12**

(21) Anmeldenummer: **82810355.6**

(22) Anmeldetag: **27.08.82**

(54) Vorrichtung zur Begrenzung des Drehwinkels bei Schraubengetrieben und Verwendung derselben.

(30) Priorität: **14.09.81 CH 5930/81**

(43) Veröffentlichungstag der Anmeldung:
**23.03.83 Patentblatt 83/12**

(45) Bekanntmachung des Hinweises auf die
Patenterteilung:
**23.03.88 Patentblatt 88/12**

(84) Benannte Vertragsstaaten:
**AT CH DE FR GB LI**

(56) Entgegenhaltungen:
FR-A-2 119 724
FR-A-2 316 461
US-A-2 944 436

(73) Patentinhaber: **SIG Schweizerische Industrie-
Gesellschaft
CH-8212 Neuhausen am Rheinfall (CH)**

(72) Erfinder: **Hampejs, Karel
Badische Bahnhofstrasse 23
CH-8212 Neuhausen am Rheinfall (CH)**

(74) Vertreter: **White, William et al
PATENTANWALTS-BUREAU ISLER AG Postfach
6940 Walchestrasse 23
CH-8023 Zürich (CH)**

Courier Press, Leamington Spa, England.

**Beschreibung**

Die vorliegende Erfindung betrifft eine Vorrichtung zur Begrenzung des Drehwinkels bei Schraubengetrieben gemäss den Oberbegriffen der unabhängigen Patentansprüche 1 und 2 sowie eine Verwendung dieser Vorrichtung gemäss dem Oberbegriff des unabhängigen Patentanspruch 3.

Bei hydraulischen Verstärkern für Servosteuerungen, beispielsweise bei digital oder schrittweise betätigten elektrohydraulischen Antriebseinheiten, ist ein stufenweise arbeitender Rotationsantrieb, wie ein Schrittschaltmotor, vorhanden, der mit einem Hubdrehventil verbunden ist. Solche Hubdreventile bestehen aus Zylinder und Kolben mit zwei oder vier Steuerkanten, um in einem Arbeitszylinder den Arbeitskolben entweder ein- oder zweiseitig zu steuern. Damit im Hubdrehventil die Steuerkanten des Kolbens axial verschoben werden, ist eine Gewindespindel in den Arbeitskolben eingewindet, so dass sich eine Drehung der Spindel in eine axiale Verschiebung umsetzt und Fluid in den Arbeitszylinder gepresst werden kann, um den Kolben axial zu verschieben. Solche Anordnungen sind als hydraulische Verstärker bekannt und beispielsweise in der CH—A 549 163 oder der US—A 2 410 049 beschrieben.

In Linearverstärken zur Umwandlung einer leistungsschwachen Drehbewegung eines Steuerorgans in eine axiale Bewegung ist oftmals eine Rückführung der Lage des Arbeitskolbens im Druckzylinder vorgesehen, um eine rasche und lagegenaue Nachführung des Arbeitskolbens an die Drehbewegung zu gewährleisten. Das Steuerorgan für den Lagevergleich ist vielfach ein Differenzschraubenantrieb, bei dem beispielsweise der Drehwinkel des Steuerorgans auf eine Gewindespindel und ein Drehwinkel der leistungsstarken Ausgangsseite auf eine Gewindemutter übertragen wird. Eine Aenderung der gegenseitigen Lage von Gewindespindel und Gewindemutter bewirkt eine axiale Verschiebung, die ihrerseits auf das Hubdrehventil übertragen wird und dort eine Aenderung der Lage der Steuerkanten bewirkt. Dabei kann, wie in der US—A 3 457 836 gezeigt, die Drehbewegung des hydraulischen Ausgangsmotors direkt auf die Gewindemutter übertragen werden oder gemäss der CH—A 594 141 kann die axiale Verschiebung des Arbeitskolbens mittels einer Steilgewindespindel in eine Drehbewegung umgewandelt werden.

Es ist bekannt bei derartigen Anordnungen zum Schutz vor grossen, von aussen wirkenden Kräften ein Schraubengetriebe zwischen Arbeitskolben und Steuerkolben einzubauen, damit diese Teile nicht starr gekoppelt sind, wie dies in den FR—A—21 19 724 und 2 316 461 beschrieben ist. In der FR—A—21 19 724 entsprechend den oberbegriffen der unabhängigen Ansprüche 1 und 2 ist eine axiale Wegbegrenzung vorgesehen, um zu verhindern, dass sich die Gewindespindel aus der Gewindehülse herausschrauben kann. Dies wird durch eine schraubenlinienförmige Ausnehmung an der Gewindespindel und einen radial nach innen gerichteten Nocken an einer hülsenförmigen Verlängerung der Gewindehülse bewirkt. Damit ist der axiale Verschiebeweg in Drehrichtung durch axiales Aneinanderstossen der am Ende der Ausnehmung (angeordneten) Kragen an dem Nocken begrenzt. Die beiden Drehteile können in beiden Drehrichtungen festklemmen, denn über die aneinanderstoßenden Anschlagsflächen wird nichts ausgesagt. Weiterhin muß die schraubenlinienförmige Ausnehmung an der Gewindespindel dem Gewinde angepaßt sein. Eine höglichkeit, den Verschiebeweg der Wegbegrenzung zu verändern ist nicht angegeben.

Es is daher eine Aufgabe der Erfindung, eine Vorrichtung zu schaffen, die eine Begrenzung des Drehwinkels bewirkt, bei der jedoch beidseits einer Mittelstellung ein genügend grosser Drehwinkel vorhanden ist, um die normalen Steuerbewegungen aufzunehmen, und durch die die Begrenzung nicht zu einem Klemmen und damit Festsitzen führen kann.

Erfindungsgemäss wird dies durch eine Vorrichtung mit den Merkmalen in den kennzeichnenden Teilen der unabhängigen Patentansprüche 1 und 2 erreicht. Die besondere Ausgestaltung bei Verwendung in einer fluidischen Regelvorrichtung ist im kennzeichnenden Teil des Verwendungsanspruchs 3 angegeben.

Ausführungsbeispiele der Erfindung werden nachfolgend anhand der Zeichnung erläutert. Es zeigen:

Fig. 1 einen Längsschnitt durch eine erste Ausführungsform einer Vorrichtung zur Begrenzung der Drehbewegung,

Fig. 2 eine Schnittansicht gemäss der Schnittlinie II—II in Fig. 1 zur Darstellung einer Endstellung.

Fig. 3 eine Schnittansicht gemäss der Schnittlinie III—III in Fig. 1 zur Darstellung der zweiten Endstellung,

Fig. 4 einen Längsschnitt ähnlich Fig. 1 durch eine zweite Ausführungsform mit einer Schraubennut,

Fig. 5 einen Ausschnitt eines Längsschnittes der Ausführungsform nach Fig. 4 und der Schraubennut in anderer Drehlage,

Fig. 6 eine Schnittansicht nach der Schnittlinie VI—VI in Fig. 4, und

Fig. 7 einen Längsschnitt durch einen Linearverstärker mit einer eingebauten Vorrichtung gemäss Fig. 4.

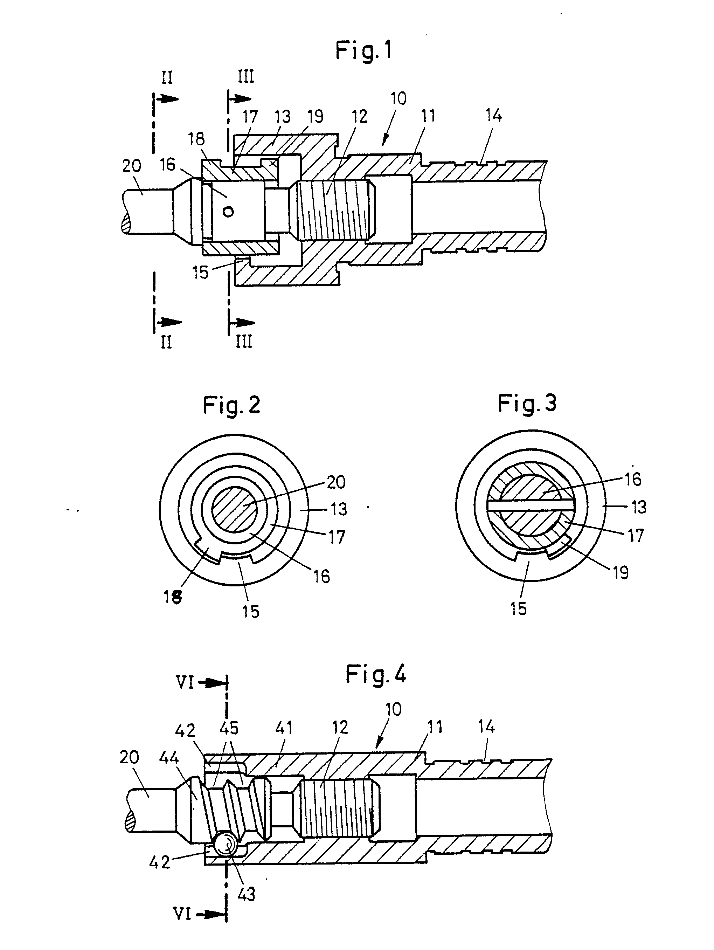

Fig. 1—3 zeigen ein Differenzschraubengetriebe 10 mit einer Gewindehülse 11 und einer Gewindespindel 12 sowie gemeinsamet Drehachse. Die Gewindehülse 11 ist andeutungsweise mit einem Rundstab 14 für eine Rückführung der Kolbenbewegung in einem Linearverstärker der eingangs beschriebenen Art, beispielsweise gemäss der CH—A 594'141, verbunden. Diese Gewindehülse 11 trägt eine Verlängerungshülse 13, die einen radial nach innen vorstehenden Nocken 15 aufweist mit beidseitig ebener Anschlagfläche.

Die Gewindespindel 12 trägt an einer Verbindungswelle 16 zur Antriebswelle 20 einen Hohlzylinder 17, der bei den beiden Endflächen je einen radial nach aussen vorstehenden Nocken 18, 19 aufweist. Durch Wahl des axialen Abstandes zwischen den beiden Nocken 18, 19 kann ein Drehwinkel zwischen nahezu 360° bis zu einem Mehrfachen dieses Winkels gewählt werden, so dass je nach Anwendungsgebiet ein längerer oder kürzerer Regelweg für ein Hubventil erlaubt werden kann. Die beiden Nocken 18, 19 mit ihren ebenen Anschlagsflächen stehen in den Endlagen in tangeutiales Richtung am Nocken 15 an, so das ein verklemmen bei axiale Bewegung nichtmöglich ist. Alle Ebenen der ebenen Anschlagsflächen an den Nocken 15, 18, 19 verlaufen durch die gemeinsame Drehachse.

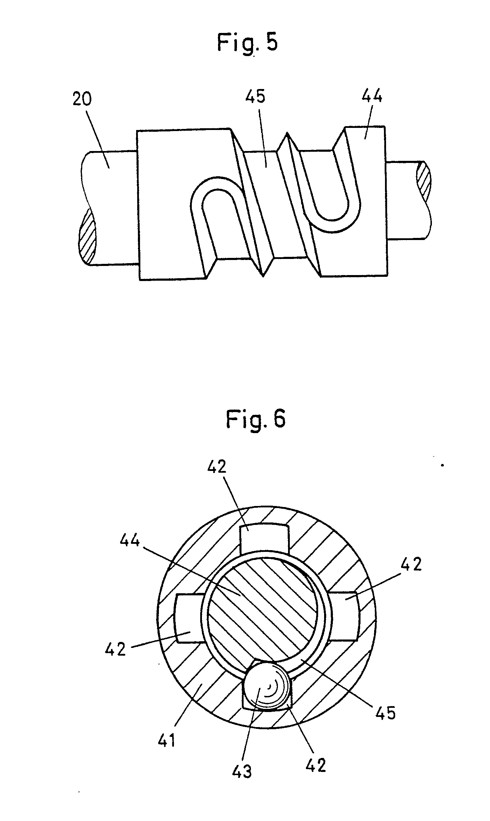

Das zweite Ausführungsbeispiel gemäss Fig. 4 bis 6 zeigt auch wieder einen Differenzschrubenantrieb 10 mit einer Gewindehülse 11 und einer Gewindespindel 12. Auch hier ist die Gewindehülse 11 mit einem Rundstab 14 starr verbunden. Die Gewindehülse 11 trägt in diesem Ausführungsbeispiel eine Verlängerungshülse 41, die mit wenigstens einer axialen Nut 42 für die Aufnahme einer Kugel 43 versehen ist.

Zwischen der Antriebswelle 20 und der Gewindespindel 12 des Differenzschraubenantriebs 10 befindet sich eine Zwischenwelle 44 mit einer schraubenlinienförmig ausgebildeten Nut 45 mit einer dem Kugeldurchmesser entsprechenden Art Nutenbreite. Die beiden in der dargestellten Art nich ersichtlichen Endwände der Nut 45 sind radial angeordnet. Es ist leicht einzusehen, dass mit dieser Drehwinkel-Begrenzung die axiale Verschiebung des Differenzschraubenantriebs durch den Umfangsweg der Kugel 43 englang der Nut 45 begrenzt wird. In dem alle Anschlagflächen radial sind, kann die Gewindespindel in der Gewindehülse ebenfalls nicht verklemmen.

Durch jede dieser beiden Ausführungsformen kann erreicht werden, dass die Wegbegrenzung zwischen einem kleinsten Drehwinkel von etwa 360° bis zu einem Mehrfachen dieses Winkels frei gewählt werden kann. Es wäre aber auch möglich, den Drehwinkel auf Teile einer ganzen Umdrehung zu beschränken. Im Ausführungsbeispiel gemäss Fig. 1 könnte dies durch zwei in Umfangsrichtung versetzt angeordnete Nocken 18, 19 oder durch zwei Nocken 15 am Hohlzylinder 13 ermöglicht werden.

Entsprechend könnten im zweiten Ausführungsbeispiel nach Fig. 4 in der Verlängerungshülse 41 mehrere Nuten 42 mit je einer Kugel 43 vorgesehen werden, um hier den Verschiebeweg des Schraubengetriebes zu begrenzen, auch könnten zwei Kugeln in die Nuten eingelegt werden, um den Verschiebeweg zu verändern.

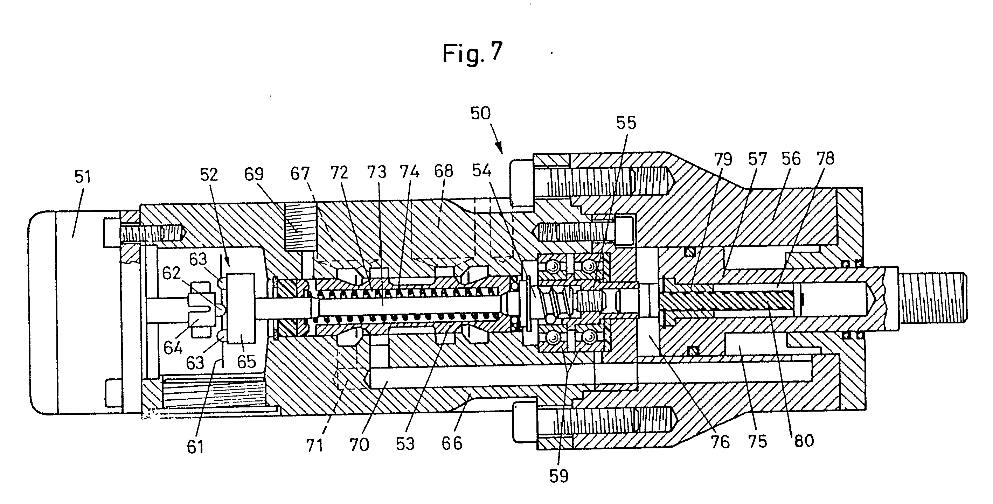

Fig. 7 zeigt einen Linearverstärker (Regelvorrichtung) 50 mit einem Motor 51 (z.B. einen Schrittschalmotor), für die Sollwerteingabe, einer axialelastische Kupplung 52, sowie mit einem hydraulischen Steuerschieber 53, einem Drehwinkelbegrenzer 54, einem Differenzschraubenantrieb 55, einem hydraulischen Arbeitszylinder 56 mit Kolben 57 und der Istwert-Rückführung mittels einer Steilgewindespindel 80.

Die axialelastische Kupplung 52 besteht aus einer elastischen Membran 61, die über kreuzweise angeordnete Halteelemente 62, 63 von Kupplungsscheiben 64, 65 mit diesen letzteren spielfrei verbunden ist. Dies gewährleistet eine winkelgetreue Uebertragung des Sollwertes auf den Differenzschraubenantrieb 55, auch wenn durch diesen eine axiale Verschiebung bewirkt wird.

Der hydraulische Steuerschieber 53 arbeitet in bekannter Weise in einem Steuerschiebergehäuse 66 mit Rückführung 67 und Steueranschluss 68 und einer Leckagerückführung 69. Das Gehäuse 66 ist mit umlaufenden Nuten für die Zufuhr und Weiterleitung eines Fluids versehen.

Der dargestellte Steuerschieber 53 weist insgesamt vier Steuerkanten auf. In der Zylinderwand sind Kanäle 70, 71 zur Leitung des Fluids vorhanden. Der Schieber 53 ist mit einer axialen Durchgangsbohrung 72 zur Durchführung einer Sollwert-Übertragungswelle 73 versehen. Mit einer Schraubenfeder 74 wird das axiale Spiel des Schiebers eliminiert.

Die Welle 73 ist mit einer Zwischenwelle mit Nut und weiter mit der Gewindespindel gemäss Fig. 4 als Drehwinkelbegrenzer 54 und mit dem Differenzschraubenantrieb 55 verbunden.

In dem Arbeitszylinder 56 ist der Kolben 57 angeordnet. Die beiden Zylinderhohlräume 75, 76 sind in bekannter Weise mit den Bohrungen 70, 68 verbunden. Der Kolben 57 weist eine Bohrung 78 auf, in der eine Spindelmutter 79 mit Steilgewinde für die Spindel 80 angeordnet ist. Mit dieser Spindel 80 wird eine axiale Verschiebung des Kolbens 57 in eine Drehbewegung umgewandelt.

Diese Spindel 80 ist mit der Gewindehülse 11 des Differenzschraubenantriebs 55 starr verbunden, wie ebenfalls aus Fig. 4 entnommen werden kann.

Wie aus Fig. 7 insbesondere entnommen werden kann, sind Schraubengetriebe 55 und Drehwinkelbegrenzer 54 in einem Hauptlager 59 angeordnet, wodurch die Einbaulänge trotz dieser zusätzlichen Vorrichtung nicht verändert wird. Ausser den bereits in der Aufgabenstellung genannten Bedingungen, die durch die vorgeschlagenen Lösungen erfüllt sind, nämlich die klemmfreie Begrenzung des Steuerschieberhubes ohne die Kraftverbindung zu unterbrechen, sind die sehr geringe Massenträgheit, Spielfreiheit und kompakte Bauweise von wesentlicher praktischer Bedeutung bei der Verwendung der erfindungsgemässen Vorrichtung.

**Patentansprüche**

1. Vorrichtung zur Begrenzung des Drehwinkels bei Schraubengetrieben (10) mit einer Gewindespindel (12) und einer Gewindehülse (11) für die Umsetzung der Differenz von zwei Drehbewegungen um eine gemeinsame Drehachse in eine Axialbewegung, bei der zwecks Verhinderung eines Verklemmens der Gewindespindel (12) am Grund der Gewindehülse (11) infolge axialer Drücke ein Wegbegrenzerelement für die relative axilae Verschiebung der Gewindespindel (12) eingebaut ist, wobei an einer Verlängerungshülse (13) der Gewindehülse (11) ein radial nach innen ragender Nocken (15) fest angebracht ist, der mit zwei der Gewindespindel (12) fest zugeordneten und beabstandeten Anschlägen zusammenarbeitet, dadurch gekennzeichnet, dass der Nocken (15) ebene Anschlagflächen aufweist, deren Ebenen durch die Drehachse verlaufen dass die zwei Anschläge (18, 19) ebene Anschlagflächen aufweisen, deren Ebenen ebenfalls durch die Drehachse verlaufen, und auf einem zur Gewindespindel (12) drehfest gehalterten Hohlzylinder (17) als radial nach aussen vorstehende Nocken (18, 19) ausgebildet sind.

2. Vorrichtung zur Begrenzung des Drehwinkels bei Schraubengetrieben (10) mit einer Gewindespindel (12) und einer Gewindehülse (11) für die Umsetzung der Differenz von zwei Drehbewegungen um eine gemeinsame Drehachse in eine Axialbewegung, bei der zwecks Verhinderung eines Verklemmens der Gewindespindel (12) am Grund der Gewindehülse (11) infolge axialer Drücke ein Wegbegrenzerelement für die relative axiale Verschiebung der Gewindespindel eingebaut ist, wobei an einer Verlängerungshülse (41) der Gewindehülse (11) ein Anschlagmittel fest angebracht ist, das mit der Gewindespindel (12) fest zugeordneten Anschlägen zusammenarbeitet, welche durch Endwände einer schraubenlinienförmigen Nut (45) in der Aussenwand einer zylindrischen Verbindungswelle (16) zwischen Antriebswelle (20) und Gewindespindel (12) gebildet werden, dadurch gekennzeichnet, dass das Anschlagmittel durch Endwände wenigstens einer axialen Nut (45) in der Innenwand der Verlängerungshülse (41) gebildet ist, und dass zwischen axialer und schraubenlinienförmiger Nut (42, 45) wenigstens eine in beiden Nuten (42, 45) rollbewegliche Kugel (43) geführt ist.

3. Verwendung der Vorrichtung nach Patentanspruch oder 2 in einer fluidischen Regelvorrichtung mit einer koaxialen Anordnung folgender Teile:

einen Sollwertgeber (51) mit einem Motor, dessen Drehbewegung über eine nichttrennbare axialelastische, die Drehbewegung starr übertragende Kupplung (52) übertragen wird,

eine mit der Kupplung (52) verbundene Sollwert-Uebertragungswelle (73) mit einer das axiale Spiel aufhebenden Schraubenfeder (74) um die genannte Welle (73) herum,

einen Steuerschieber (53) mit einem Axiallager in einem Steuerschiebergehäuse (66),

eine Istwert-Rückführungsspindel (80), dadurch gekennzeichnet, dass das Differenz-Schraubengetriebe (55) und die axial mit diesem verbundene Vorrichtung (54) zur Begrenzung des Drehwinkels koaxial in einem Hauptlager (59) der Regelvorrichtung (50) angeordnet sind.

4. Verwendung nach Patentanspruch 3, dadurch gekennzeichnet, dass das Steuerschiebergehäuse (66) für eine Vierkanten-Steuerung gebaut ist, und dass als Steuerschieber (53) entweder ein Zweikanten-Steuerschieber oder ein Vierkanten-Steuerschieber einsetzbar ist.

**Revendications**

1. Dispositif pour limiter l'angle de rotation dans des mécanismes à vis (10) comportant une broche filetée (12) et un manchon fileté (11) pour la conversion de la différence entre deux mouvements de rotation autour d'un axe de rotation commun en un mouvement axial, dans lequel, en vue d'empêcher un coincement de la broche filetée (12) à la base du manchon fileté (11) sous l'effet de pressions axiales, il est prévu un élément de limitation de course pour la translation axiale relative de la broche filetée (12), un bossage (15) faisant sailie radialement vers l'intérieur étant monté en position fixe sur une douille de prolongement (13) du manchon fileté (11), et qui coopère avec deux butées espacées l'une de l'autre et associées de façon fixe à la broche filetée (12), caractérisé en ce que le bossage (15) comporte des surfaces planes de butée dont les plans passant par l'axe de rotation, en ce que les deux butées (18, 19) comportant des surfaces planes de butée dont les plans passent également par l'axe de rotation et elles sont agencées, sur un cylindre creux (17) maintenu sans possibilité de rotation relative par rapport à la broche filetée (12), sous la forme de bossages (18, 19) faisant saillie radialement vers l'extérieur.

2. Dispositif pour limiter l'angle de rotation dans des mécanismes à vis (10) comportant une broche filetée (12) et un manchon fileté (11) pour la conversion de la différence entre deux mouvements de rotation autour d'un axe de rotation commun en un mouvement axial, dans lequel, en vue d'empêcher un coincement de la broche filetée (12) à la base de manchon du fileté (11) sous l'effet de pressions axiales, il est prévu u élément de limitation de course pour la translation axiale relative de la broche filetée (12), un moyan de butée étant prévu en position fixe sur une douille de prolongement 41 du manchon fileté (11), et qui coopère avec des butées associées de façon fixe à la broche filetée (12) et qui sont constituées par des parois extrêmes d'une rainure de profil hélicoïdal (45) formée dans la paroi extérieure d'un arbre cylindrique (16) de liaison entre l'arbre d'entraînement (20) et la broche filetée (12), caractérisé en ce que le moyen de butée est constitué par des parois extrêmes d'au moins une rainure axiale (45) ménagée dans las paroi intérieure de la douille de prolongement (41), et en ce qu'entre une rainure axiale et une rainure hélicoïdale (42, 45) est guidée au moins une bille (43) mobile par roulement dans les deux rainures (42, 45).

3. Utilisation du dispositif selon la revendication 1 ou 2 à un dispositif de régulation fluidique dans lequel sont disposées coaxialement les parties suivantes:

un générateur de valeur de consigne (51) comportant un moteur dont le mouvement de rotation est transmis par l'intermédiaire d'un accouplement (52) axialement élastique, non-séparable et transmettant rigidement le mouvement de rotation,

un arbre de transmission de valeur de consigne (73), relié à l'accouplement (52) et comportant un ressort hélicoïdal (74) supprimant le jeu axial et disposé autour de l'arbre précité (73),

un tiroir de distribution (53) monté au moyen d'un palier axial dans un carter de distributeur (66),

une broche de renvoi de valeur réelle (80), caractérisée en ce que la transmission à vis différentiel (55) et le dispositif (54) relié axialement à celui-ci et servant à limiter l'angle de rotation sont disposés coaxialement dans un palier principal (59) du dispositif de régulation (50).

4. Utilisation de dispositif selon la revendication 3, caractérisée en ce que le carter de distributeur (66) est réalisé pour une commande à quatre arêtes de distribution et en ce que, comme tiroir de distribution (53), il est possible d'utiliser soit un tiroir de distribution à deux arêtes, soit un tiroir de distribution à quatre arêtes.

## Claims

1. A device for limiting the angle of rotation in screw transmissions (10) comprising a threaded spindle (12) and a tapped sleeve (11) for converting the difference between two rotational movements around a common axis of rotation into an axial movement, in which device, to prevent jamming of the threaded spindle (12) at the bottom of the tapped sleeve (11) as a result of axial pressures, there is installed a path limiter member for relative axial displacement of the threaded spindle (12), a radially inwardly projecting cam (15) being firmly attached to an extension sleeve (13) of the tapped sleeve (11), which cam (15) interacts with two spaced stops firmly associated with the threaded spindle (12), characterized in that the cam (15) comprises flat stop faces, whose planes run through the axis of rotation, in that the two stops (18, 19) comprise flat stop faces, whose planes also run through the axis of rotation, and are constructed on a hollow cylinder (17) fastened unrotatably to the threaded spindle (12) and in the form of outwardly projecting cams (18, 19).

2. A device for limiting the angle of rotation in screw transmissions (10) comprising a threaded spindle (12) and a tapped sleeve (11) for converting the difference between two rotational movements around a common axis of rotation into an axial movement, in which device, to prevent jamming of the threaded spindle (12) at the bottom of the tapped sleeve (11) as a result of axial pressures, there is installed a path limiter member for relative axial displacement of the threaded spindle, a stop means being firmly attached to an extension sleeve (41) of the tapped sleeve (11), which stops means interacts with stops firmly associated with the threaded spindle (12), which stops are formed by end walls of a helical groove (45) in the outer wall of a cylindrical connecting shaft (16) between the drive shaft (20) and the theaded spindle (12), characterized in that the stop means is formed by end walls of at least one axial groove (45) in the inner wall of the extension sleeve (41), and in that at least one ball (43) rollable in both grooves (42, 45) is guided between the axial and helical grooves (42,45).

3. use of the device according to claim 1 or claim 2 in a fluid regulating device with a coaxial arrangement of the following parts:

a desired value input element (51) with a motor, whose rotary motion is transmitted via an inseparable, axially resilient coupling (52) which rigidly transmits the rotary motion,

a desired value transmission shaft (73) connected with the coupling (52) with a helical spring (74) around the above-mentioned shaft (73) resisting the axial play,

a control slide valve (53) with a journal bearing in a control slide valve housing (66),

an actual value feedback spindle (80), characterized in that the differential screw transmission (55) and the device (54) connected axially therewith to limit the angle of rotation are arranged coaxially in a main bearing (59) of the regulating device (50).

4. Use according to claim 3, characterized in that the control slide valve housing (66) is constructed for four edge control, and in that either a two-edged control slide valve or a four-edge control valve is to be used as the control slide valve (53).

### Fig.1

### Fig.2

### Fig.3

### Fig.4

## Fig. 5

## Fig. 6

# Fig. 7

0 074 922